# EUROPEAN PATENT SPECIFICATION

(11) **EP 0 633 436 B1**
(45) Date of publication and mention of the grant of the patent: **25.03.1998**
(21) Application number: 94400770.7
(22) Date of filing: 08.04.1994
(51) Int. Cl.: F25D 17/04, A23B 7/148, A23L 3/36, A23L 3/3445, A23L 3/32

(54) **Freshness retaining device for refrigerator**
Vorrichtung zum Frischhalten im Kühlschrank
Dispositif pour retenir la fraîcheur dans un réfrigérateur

(30) Priority: 06.07.1993 KR 9312655
(43) Date of publication of application: 11.01.1995
(73) Proprietor: LG ELECTRONICS INC., Seoul (KR)
(72) Inventor: Kwon, Young Cheol, No. 328, Goldstar Dormitory, Changwon, Kyungsangnam-Do (KR)
(74) Representative: Fort, Jacques

(56) References cited:
- DE-A- 1 467 785
- DE-A- 3 035 914

## Description

### BACKGROUND OF THE INVENTION

### Field of the Invention

The present invention relates in general to a freshness retaining device for a refrigerator and, more particularly to a freshness retaining device for retaining the freshness of chilled food, such as vegetables, fruits, meat and fishes, using magnetic force.

### Background of the Invention

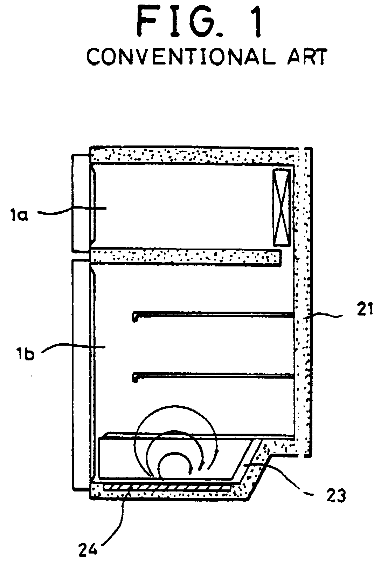

With reference to Fig. 1, there is shown a conventional refrigerator. As shown in this drawing, a refrigerator body 21 is divided into two chambers, that is, a freezing chamber 1a and a refrigerating chamber 1b. In addition, a vegetable container 23 is provided on a lower section of the refrigerating chamber 1b. In order to retain the freshness of chilled food such as vegetables, fruits, meat and fishes, the refrigerator preferably includes a freshness retaining device in the refrigerating chamber 1b. The conventional freshness retaining device comprises a rectangular magnet 24 which is mounted on a lower section of the refrigerator body 21 such that it is spaced apart from the bottom of the vegetable container 23 by a predetermined distance. The magnet 24 of the freshness retaining device supplies magnetic energy to the chilled food (not shown) in the vegetable container 23, thus to retain the freshness of the chilled food.

The above freshness retaining device requires a magnetic energy source for generating huge magnetic energy. However, it has been noted that it is not easy to find out such a magnetic energy source and, furthermore, the magnetic energy generated by such a magnetic energy source can not be applied to all of sections of the refrigerating chamber 1b. In this regard, the conventional freshness retaining device may fail in retaining the freshness of the chilled food in the refrigerating chamber 1b.

### SUMMARY OF THE INVENTION

It is, therefore, an object of the present invention to provide a freshness retaining device for a refrigerator in which the aforementioned problems can be overcome and which supplies magnetized air to all of sections of the refrigerating chamber of the refrigerator, thus to activate tissue of the chilled food in the refrigerating chamber and to desirably retain the freshness of the chilled food.

In order to accomplish the above object, there is provided a freshness retaining device for a refrigerator in accordance with claim 1. Preferred embodiments are defined in the dependent claims.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a schematic sectional view showing a construction of a conventional refrigerator;
Fig. 2 is a sectional view of a refrigerator provided with a freshness retaining device in accordance with the present invention; and
Fig. 3 is a schematic view showing a construction of a freshness retaining device in accordance with an embodiment of the present invention.

### DESCRIPTION OF THE PREFERRED EMBODIMENTS

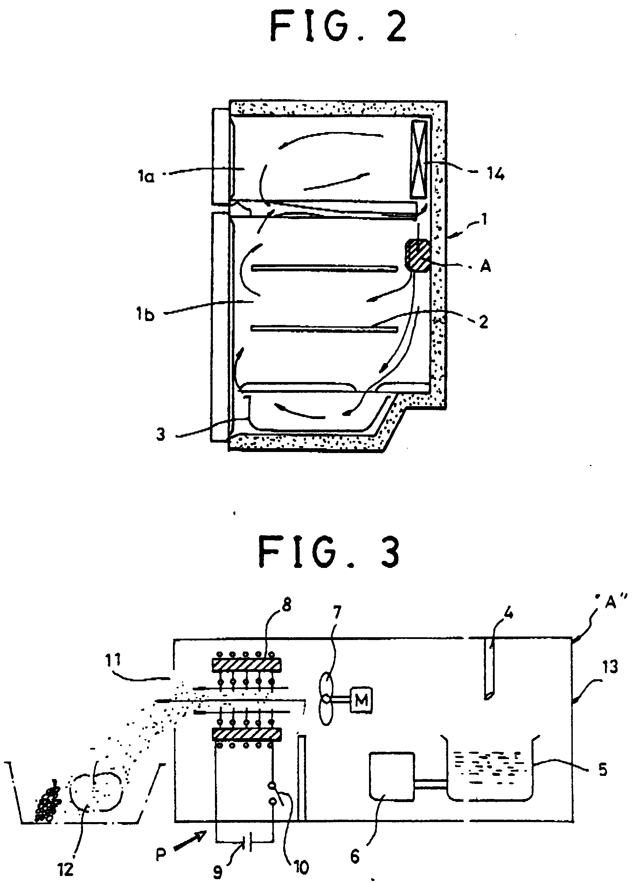

Referring to Fig. 2, there is shown in a sectional view a refrigerator provided with a freshness retaining device in accordance with the present invention. In the refrigerator, a refrigerator body 1 is divided into two chambers, that is, a freezing chamber 1a and a refrigerating chamber 1b. The freezing chamber 1a includes an evaporator 14 on a side wall thereof while the refregerating chamber 1b is provided with a plurality of shelves 2. In addition, a vegetable container 3 is provided on a lower section of the refrigerating chamber 1b. In order to retain the freshness of chilled food such as vegetables, fruits, meat and fishes, the refrigerator includes a freshness retaining device A in the refrigerating chamber 1b. The freshness retaining device A is detachably mounted on an inner side wall of the refrigerating chamber 1b.

Fig. 3 shows a construction of a freshness retaining device A in accordance with an embodiment of the present invention. The device A is encased by a housing 13 which includes an air inlet pipe 4 at an upper section thereof and an outlet 11 at a side wall or a left side wall thereof. The device A also includes a water reservoir 5 on a right side section in the housing 13. An ultrasonic humidifier 6 is placed on a side of the water reservoir 5 and generates an ultrasonic wave in order to decompose the water in the reservoir 5 into water molecules. In order to forcibly introduce the water molecules to the outlet 11 of the housing 13, a blower fan 7 coupled to an output shaft of a motor M is mounted above the ultrasonic humidifier 6. At the front of the blower fan 7, a magnetic field generator 8 including a plurality of magnets is provided in order to magnetize the water molecules. This magnetic field generator 8 is electrically connected to a power source unit P including a power source 9 and a switch 10 connected to the power source 9 in series.

When the freshness retaining device A is applied with the electric power of the power source 9 of the unit P, the switch 10 is switched on and drives the magnetic field generator 8, the motor M and the ultrasonic humidifier 6. Here, it should be noted that the power source 9 is electrically connected to both the motor M and the ultrasonic humidifier 6 even though the electric connection between them is omitted in Fig. 3. When the motor M starts its rotation, the blower fan 7 coupled to the output shaft of the motor M is rotated and forcibly introduces the outside air into the device A through the inlet pipe 4. The air introduced into the device A is mixed with the water molecules decomposed by the ultrasonic humidifier 6. The water molecule-laden air is in turn introduced to the magnetic field generator 8 in a nearly horizontal direction by the blowing force of the fan 7. When the speed of the water molecules is fastly advanced, the magnetic force of the water is also increased. The water molecules in the air are changed in their structures into hexagonal structures by the magnetic energy generated by the magnetic field generator 8 and delivered from the device A along with the air through the outlet 11. The hexagonal water-laden air is supplied to chilled food 12 in the refrigerating chamber 1b and in the vegetable container 3 and activates the tissue of the chilled food 12, thus to retain the freshness of the chilled food 12.

As described above, a freshness retaining device of the present invention magnetizes water molecules and circulates the magnetized water molecules together with air in all of sections of the refrigerating chamber of the refrigerator, thus to activate the tissue of chilled food such as fishes in the refrigerating chamber and to retain the freshness of the chilled food. In this regard, the freshness retaining device of the present invention remarkably improves the quality of the refrigerators.

## Claims

1. A freshness retaining device for a refrigerator comprising a magnetic field generator, characterized in that it further comprises:
a housing (13) detachably mountable on an inner wall of a refrigerating chamber of said refrigerator and having an air inlet pipe (4) and an outlet pipe (11);
a blower fan (7) connected to a motor, mounted in an inner part of said housing and arranged to forcibly direct water molecules originating from an ultrasonic humidifier (6) to said outlet pipe of the housing;
said magnetic field generator (8) mounted at the front of said blower fan (7) for magnetizing said water molecules; and
a power source unit (9,10) for supplying electric power at least to the ultrasonic humidifier and the motor.

2. A freshness retaining device according to claim 1, characterized in that said ultrasonic humidifier (6) is connected to a water reservoir (5) provided in said housing (13) and generates an ultrasonic wave for decomposition of water in said reservoir into water molecules.

3. A freshness retaining device according to claim 1 or 2, wherein said magnetic field generator (8) includes a plurality of magnets.

4. A freshness retaining device according to claim 1 or 2, wherein said power source unit also supplies electric power to said magnetic field generator (8).

5. A freshness retaining device according to any one of claims 1-4, wherein said power source unit includes a power source (9) and a switch (10) connected to said power source (9).

## Patentansprüche

1. Vorrichtung zum Frischhalten in einem Kühlschrank, die einen Magnetfeldgenerator umfaßt, **dadurch gekennzeichnet, daß** sie weiterhin umfaßt:
ein Gehäuse (13), das herausnehmbar an eine Innenwand einer Kühlschrankkammer des Kühlschrankes montierbar ist und das ein Lufteingangsrohr (4) und ein Ausgangsrohr (11) hat;
ein Gebläseventilator (7), der mit einem Motor verbunden ist, welcher in einem inneren Teil des Gehäuses befestigt ist und angeordnet ist, um direkt Wassermoleküle, die von einem Ultraschallbefeuchter (6) stammen, zu dem Ausgangsrohr des Gehäuses zu zwingen;
den Magnetfeldgenerator (8), der auf der Vorderseite des Gebläseventilators (7) zum Magnetisieren der Wassermoleküle befestigt ist; und
eine Stromquelleneinheit (9,10) zum Versorgen mit elektrischem Strom von mindestens dem Ultraschallbefeuchter und dem Motor.

2. Frischhaltevorrichtung nach Anspruch 1, **dadurch gekennzeichnet, daß** der Ultraschallbefeuchter (6) mit einem Wasserreservoir (5) verbunden ist, welches in dem Gehäuse (13) angeordnet ist und eine Ultraschallwelle zum Auflösen des Wassers in dem Reservoir in Wasermoleküle erzeugt.

3. Frischhaltevorrichtung nach Anspruch 1 oder 2, worin der Magnetfeldgenerator (8) eine Vielzahl von Magneten beinhaltet.

4. Frischhaltevorrichtung nach Anspruch 1 oder 2, worin die Stromquelleneinheit ebenso den Magnetfeldgenerator (8) mit elektrischem Strom versorgt.

5. Frischhaltevorrichtung nach einem der Ansprüche 1 - 4, worin die Stromquelleneinheit eine Stromquelle (9) und einen Schalter (10), welcher mit der Stromquelle (9) verbunden ist, beinhaltet.

## Revendications

1. Dispositif maintenant la fraîcheur pour un réfrigérateur, comprenant un générateur de champ magnétique, caractérisé en ce qu'il comprend en outre:
un boîtier (13) montable de manière amovible sur une paroi intérieure d'une chambre de réfrigération dudit réfrigérateur et ayant un conduit d'entrée d'air (4) et un conduit de sortie (11);
un ventilateur soufflant (7) relié à un moteur, monté dans une partie intérieure dudit boîtier et agencé pour diriger de manière forcée des molécules d'eau provenant d'un humidificateur à ultrasons (6) vers ledit conduit de sortie du boîtier;
ledit générateur de champ magnétique (8) monté devant ledit ventilateur soufflant (7) pour magnétiser lesdites molécules d'eau; et
une unité de source d'énergie (9,10) pour fournir de l'énergie électrique au moins à l'humidificateur à ultrasons et au moteur.

2. Dispositif maintenant la fraîcheur selon la revendication 1 caractérisé en ce que ledit humidificateur à ultrasons (6) est relié à un réservoir d'eau (5) prévu dans ledit boîtier (13) et produit une onde ultrasonique pour la décomposition de l'eau dans ledit réservoir en molécules d'eau.

3. Dispositif maintenant la fraîcheur selon la revendication 1 ou 2 dans lequel ledit générateur de champ magnétique (8) comprend une pluralité d'aimants.

4. Dispositif maintenant la fraîcheur selon la revendication 1 ou 2 dans lequel ladite unité de source d'énergie fournit aussi de l'énergie électrique audit générateur de champ magnétique (8).

5. Dispositif maintenant la fraîcheur selon l'une quelconque des revendications 1-4 dans lequel ladite unité de source d'énergie comprend une source d'énergie (9) et un commutateur (10) relié à ladite source d'énergie (9).
